# EUROPEAN PATENT APPLICATION

(11) **EP 1 113 213 A1**
(43) Date of publication of application: **04.07.2001**
(21) Application number: 99830815.9
(22) Date of filing: 30.12.1999
(51) Int. Cl.: F16M 7/00

(54) **Support foot for heavy bodies**

(71) Applicant: Rexnord Marbett S.p.A., 42015 Correggio (Reggio Emilia) (IT)
(72) Inventor: Andreoli, Andrea, 41010 Villanova, Modena (IT); Bellini, Emanuele, 41037 Mirandola, Modena (IT)
(74) Representative: Maccalli, Marco

(57) **Abstract**

A support foot for heavy bodies, in particular operating machines and the like, comprises a stem (2) for joining the foot (1) to the machine, joined to a base block (3) intended to rest on a support surface. The base block (3) comprises a chamber (7) containing a load distribution means (11) designed to receive and distribute a load applied to the stem (2) over the walls of the chamber (7).

## Description

The present invention relates to a support foot of the type used, for example, for supporting heavy bodies, in particular operating machines such as conveyor belts for example.

Support feet of the above mentioned type are generally formed by a stem joined at one end thereof to a base block intended to rest on a support surface, for example the ground. At the other end thereof, the stem is joined, usually by means of screwing so as to allow adjustment of the foot height, to the heavy body which must be supported, for example to an operating machine such as a conveyor belt, in particular to a frame thereof.

The connection between the stem and the base block may be of a rigid type - in which case the feet are referred to as fixed feet - or may be such as to allow adjustment of the relative position of said stem and base block so that they may be adapted to support surfaces which are not flat; in this case they are referred to as articulated support feet.

The main parameter which characterizes the support feet for heavy bodies is the maximum withstandable load, understood as being the value of the load applied to the stem of the foot corresponding to the limit of elastic deformability of the said foot. Support feet with plastic or steel stems, having a varying diameter, depending on the maximum withstandable load, are commercially available. The base blocks may also be made of plastic or steel, again depending on the maximum load.

Feet with a stem and base block made of steel are able to withstand maximum loads generally higher than those which can be withstood by feet with a plastic stem and base block, and by feet with a steel stem and plastic base block. However, totally steel feet are more costly and their greater cost cannot be justified in many applications where there are no maximum withstandable load requirements.

In the case of feet with a plastic base block and in particular, but not exclusively, articulated feet, a limit value for the maximum withstandable load is determined by the fact that the contact area between the stem and the base block is small and, therefore, the load applied to the stem produces a very high specific load on the base block which may cause breakage thereof even in the case of loads applied to the stem which are not very high.

In order to overcome this problem, on the one hand, it has been necessary to use, for manufacture of the base block, synthetic materials which are suitably constant, over time, as regards the strength properties of the product and are approved for this purpose, for example polyamide with a glass-fibre filler having a low or zero content of surplus material recycled from previous production cycles, and which are therefore somewhat costly. On the other hand, attempts have been made to increase the contact area between the stem and the base block by modifying, in certain cases, the shape of the stem end or, in other cases, by positioning metal plates or the like between the end of the stem and the base block.

In view of the state of the art described, one object of the present invention is to provide a support foot which is low-cost, but which at the same time is able to withstand high loads.

In accordance with the. present invention, this object is achieved by means of a support foot comprising a stem for joining the foot to the machine, joined to a base block intended to rest on a support surface, characterized in that said base block comprises a chamber containing a load distribution means designed to receive, from the stem, a load applied to the stem and distribute it around the walls of the chamber.

The characteristic features and advantages of the present invention will emerge clearly from the following detailed description of two possible practical embodiments thereof, illustrated purely by way of nonlimiting examples in the accompanying drawings in which:
Figure 1 is a sectioned and exploded axonometric view of a support foot in accordance with a first possible practical embodiment of the present invention;
Figure 2 is a view of the support foot, similar to that of Figure 2, but not in exploded form;
Figure 3 is a view, in a cross-sectional plane, along the plane indicated by III-III in Figure 2;
Figure 4 is a sectioned and exploded axonometric view of a support foot in accordance with a second possible practical embodiment of the invention;
Figure 5 is a view, in a cross-sectional plane, similar to that of Figure 3, of the support foot according to Figure 4; and
Figure 6 is a view, in a cross-sectional plane, along the plane indicated by VI-VI in Figure 5.

With reference to the drawings, a support foot according to the invention, denoted in its entirety by 1, comprises a stem 2 and a base block indicated as a whole by 3. The base block 3, and then the stem 2, will be now described.

The base block 3 comprises a base-block body 4 which, in the example, is circular in plan view, but generally may have other shapes and which is made as one piece from synthetic material and formed so as to have a base 5 and an annular wall 6 which projects substantially centrally from the base 5. The annular wall 6, which in the example has a cylindrical shape, defines and encloses a cavity, or well, or chamber 7 which is open at the top, closed laterally by the annular wall 6 and closed (or substantially closed, as will be described in more detail below) at the bottom by a portion 50 of the base 5. The upper edge of the wall 6 has, projecting from it towards the inside of the chamber 7, lugs 61 which in the example are four in number and arranged in succession circumferentially.

Perimetrally with respect to the annular wall 6, a succession of ribs 8, which in the example shown are arranged in a spoke-like manner and have a height, relative to the base 5, decreasing towards the outside of the base-block body 4, connects the external surface of the annular wall 6 to the base 5. Substantially at the far end of the ribs 8, an additional wall or collar 9 also projects from the base 5, said wall having a height, relative to the base 5, less than the height of the annular wall 6 and generally also having a smaller thickness. The ribs 8 divide the zone of the base 5 lying between the annular wall 6 and the collar 9 into a plurality of segments 52. Optionally one of more of said segments 52 (in the example shown, two segments 52 diametrically opposite each other) have, formed therein, through-holes in the form of eyelets 53 so as to allow, where desirable or necessary, fixing of the base block 3 to the ground or more generally to the support surface, for example by means of screws, not shown.

A groove 10 is also formed along the outer peripheral edge 51 of the base 5.

In the example of embodiment described here, the chamber 7 houses an insert 11 which is made of elastomeric material, such as a thermoplastic or vulcanized rubber or a silicone rubber, and is provided centrally and at the top with an undercut 12 having, for example, a substantially circular shape.

The base 5 is provided underneath with a cushion 13 which is made, for example, of a material similar to that forming the insert 11 and in the example is disc-shaped and which has the function of preventing the foot from slipping on the support surface and damping the vibrations of the operating machine which are transmitted to the base block via the stem. The disc 13 extends peripherally beyond the outer peripheral edge 51 of the base 5. Where the base 5 is provided with through-holes 53 for receiving screws for fixing the base block to the ground or to the support surface, the cushion 13 will be provided with corresponding through-holes 130.

In the example of embodiment being described, the portion 50 of the base 5 does not close entirely the bottom of the chamber 7, one or more openings 14 which connect the chamber 7 to the bottom side of the base 5 being provided in said base portion 50. For example, the base 5 is provided with a plurality of said openings 14 which are distributed in a spoke-like manner and each of which is aligned with a respective rib 8.

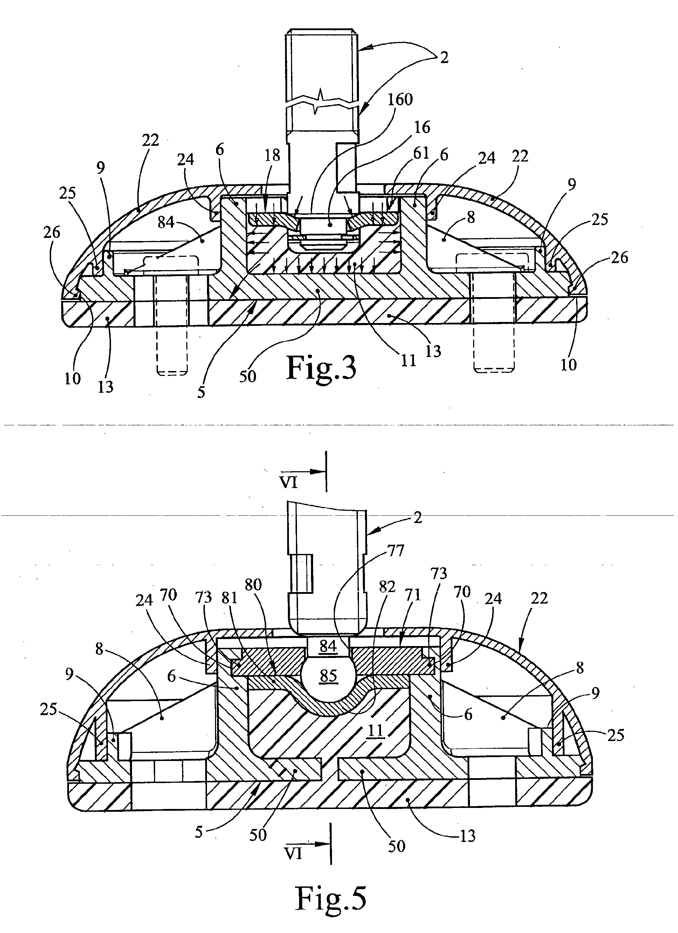

The stem 2 has, at the end 15 for joining to the base block 3, a terminal portion 16 having a smaller diameter, in particular a diameter slightly smaller than the diameter of the undercut 12 formed in the insert 11 seated in the chamber 7. A shoulder 160, which is preferably conical (clearly visible in Figure 3), is formed between the terminal portion 16 with a smaller diameter and the remaining portion of the stem 2. Said terminal portion 16 is also provided with a circumferential groove 17. The diameter of the terminal portion 16 of the stem corresponds substantially to the internal diameter of a ring 18 intended to be fitted onto the said terminal portion 16 and to be retained there, such that it cannot be removed, by means of a resilient ring 19 which engages inside the circumferential groove 17. The stem 2 may be provided with a thread or other means for joining to the body (not shown) which must be supported by the foot.

The ring 18 is preferably made so as to have an outer zone 20 which is substantially flat and an inner zone 21 which is drawn with a concavity directed upwards, so as to form a kind of "cup", which during use is designed to come into contact with the conical portion 160 of the stem 2. The ring 18 has an outer diameter corresponding to the inner diameter of the chamber 7.

Optionally, the foot 1 is completed by a covering cap 22, for example made of synthetic material and having a central hole 23 with a diameter at least equal to the diameter of the stem 2. The inner side of the cap 22 has, formed therein, a first, more internal, circumferential rib 24, a second circumferential rib 25 concentric with and outside the first rib 24 and peripherally a circumferential tooth 26.

In order to assemble the foot 1, the ring 18 is fitted onto the terminal portion 16 of the stem 2 and is fixed there, such that it cannot be removed, by inserting the resilient ring 19 into the groove 17. Then, the assembly consisting of stem 2 and ring 18 is inserted into the chamber 7, the terminal portion 16 of the stem with the spring clip 19 being seated in the undercut 12 in the insert 11. By pressing the stem 2, the ring 18 is made to come into contact with the shoulder 160 and go beyond the lugs 61, passing underneath them, said lugs thus preventing the assembly consisting of stem 2 and ring 18 from coming out of the chamber 7. The outer zone 20 of the ring 18 rests on the upper surface of the insert 11. If necessary, the cap 22 is then assembled, the ribs 24 and 25 thereof fitting, with interference, onto the upper outer zone of the annular wall 6 and onto the collar 9, respectively, while the circumferential tooth 26 is inserted into the groove 12, snap-engaging onto the base 5.

During use, i.e. when the support foot 1 is applied to a body such as an operating machine, the chamber 7 acts as a cylinder, the ring 18 as a piston, the stem 2 as a piston rod and the rubber insert 11 as a means for distributing the load applied to the stem 2 over the walls of the chamber 7, i.e. over the wall 6 and over the base portion 50. When the stem 2 is subjected to a load, the latter is transmitted to the ring 18 and, via the rubber insert 11, the load applied to the stem 2 is distributed, not only over the portion of the base 5 acting as the bottom of the chamber 7, but also over the side walls of the said chamber 7. In this way, the working area over which the load applied to the stem 2 is distributed is extensive and, therefore, the specific load on the base block 3 is smaller than that of the known solutions where the stem 2 rests directly on the base-block body 4. This is schematically illustrated in Figure 3, where the arrows are intended simply to indicate the above mentioned distribution of the load applied to the stem 2 over all the walls of the chamber 7 and not only over the bottom 50 of the latter.

In this way, for the same quality of synthetic material used for manufacturing the base block, in particular the base-block body 4, the maximum load which can be withstood by the support foot is significantly greater. For example, if polyamide with a glass filler is used, the maximum load which can be withstood by the support foot according to the invention is significantly greater than that which could be withstood by a support foot made again using polyamide with a glass filler, but in accordance with the known solutions which envisage direct bearing contact of the stem against the base block.

Conversely, it is possible to manufacture support feet which are characterized by sufficiently high maximum load values also using, for manufacture of the base-block body 4, synthetic materials which are less resistant and therefore of lower quality and consequently less costly. For example, in place of the commonly used polyamide or polypropylene with glass filler, of approved quality, it is possible to use synthetic materials which are the same, but obtained from the recycling of surplus material from previous manufacturing cycles.

Nor is it necessary, in contrast to in the case of the known support feet, for the end of the stem 2 in contact with the base block to have a suitable form for increasing the area of contact with the base block or for metal plates and the like to be provided for this purpose. It should be noted that, at least in the case of steel stems which are made from round rods or hexagonal bars, in order to obtain a stem with a spherical end of suitable diameter, it is necessary to start with round rods or hexagonal bars having a size greater than that which would strictly be necessary to withstand the desired load, something which requires long and costly machining, resulting in needless machining waste. Owing to the present invention, it is possible to use steel stems obtained by means of milling from a threaded bar with a diameter chosen depending on the load which the support foot is intended to withstand.

The ribs 8 act as reinforcements and transmit to the base 5, and hence to the ground or generally to the support surface, the forces which are exerted via the insert 11 so as to be distributed over the annular wall, thus helping increase the rigidity of the support foot.

The central drawn portion of the ring 18, together with the conical configuration of the shoulder 160 of the stem 2, results in an articulated joint between the stem 2 and the base block 3, thus allowing relative inclination thereof. In other words, the support foot is articulated. However, this is not to be regarded as a restrictive feature of the present invention, which may be applied equally well to the production of fixed feet.

In order to manufacture the support foot described above it is advantageous to use a moulding method for co-injection of two synthetic materials, the first one for producing the base-block body 4 and the second one, consisting of elastomeric material,- for producing simultaneously the insert 11 and the cushion 13. Owing to the openings 14 formed on the bottom of the chamber 7, the insert 11 and the disc 13 may be manufactured simultaneously.

However, where there is no apparatus suitable for performing co-injection moulding, the support foot described may also be made by means of co-injection moulding in two steps, the first one for manufacture of the base-block body 4 and the second one for simultaneous manufacture of the insert 11 and the cushion 13.

It should be noted, however, that the provision of the openings 14 on the bottom of the chamber 7 is not absolutely essential, it being possible to provide a support foot which is entirely similar to that described, but in which the insert 1 and the cushion 13 are no longer formed as one piece. Among other things this allows the use, for manufacturing the insert 11 acting as a load distribution means and the anti-slip cushion 13, of two rubbers with different properties.

The cap 22, where present, performs primarily two functions.

One function of the cap 2 is that of acting as a cover for the base-block body 4, thus preventing the various recesses and interstices in the latter (for example the spaces between the ribs-8, the seats for the screws or the other means for fixing the base block to the ground) from remaining exposed and becoming traps for bacteria - an important aspect in particular in view of the fact that the support feet are often used in food-product preparation plants.

Another function of the cap 22 is that of providing an aesthetic lining for the base block. The base-block body 4 may in fact, over time, in particular if exposed to particularly aggressive external agents, be subject to deterioration, for example discoloration. This is true generally and in particular when one considers that, owing to the present invention, it is possible to use synthetic materials which are not high-quality and are therefore low-cost, for the manufacture of the base-block body 4. By designing the cap 22 such that it may be made in a low-cost manner, using a synthetic material which does not have to satisfy particular load-resistance requirements, but merely has to have a pleasing appearance and be resistant to attack by aggressive agents or be made of thin stainless steel, it is possible to ensure that the support foot retains its aesthetic properties over time. It is also possible to provide a range of support feet in various colours by simply producing covering caps in several colours.

It is obvious that variations and/or additions may be made to that described and illustrated above.

In particular, it is necessary to underline the operational similarity between the chamber 7 and the chamber of a cylinder, between the ring 18 and a piston and between the rubber insert 11 and a non-compressible fluid which fills the chamber 7, namely a constant-volume deformable means which is able to distribute the load applied to the stem over the walls of the chamber 7. As a result, a person skilled in the art will be able to readily devise, by making the necessary modifications in each case, practical embodiments of the invention other than those described above in which the rubber insert 11 is replaced, for example, by a viscous fluid, it obviously being necessary in this case to provide a fluid-tight joint between the ring 18 and the side walls of the chamber 7.

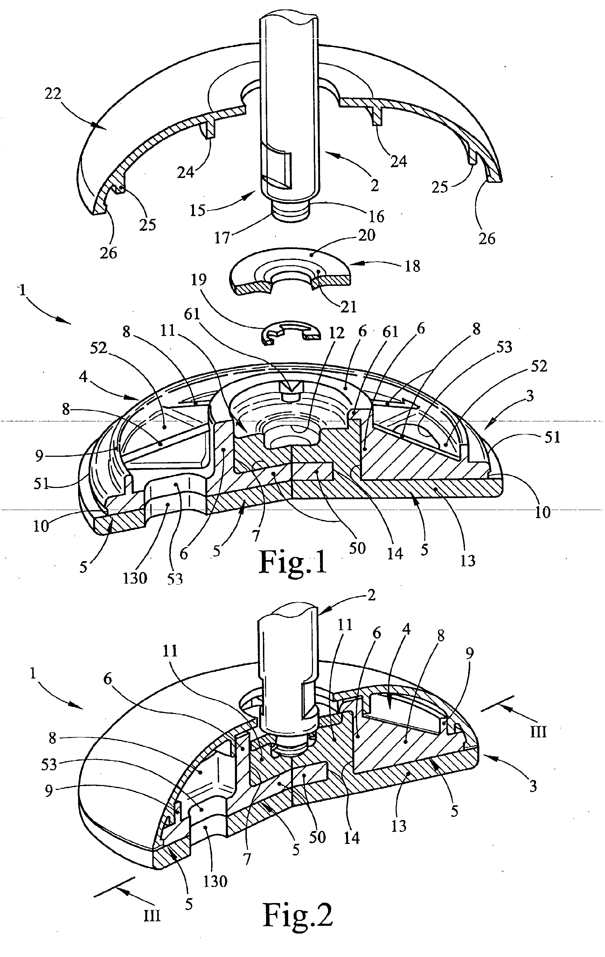

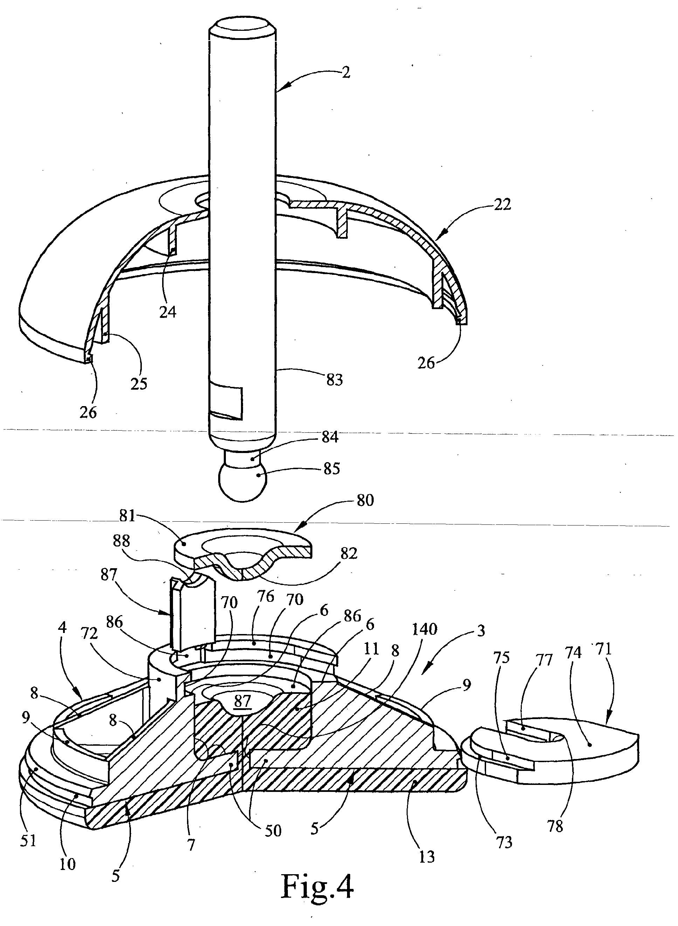

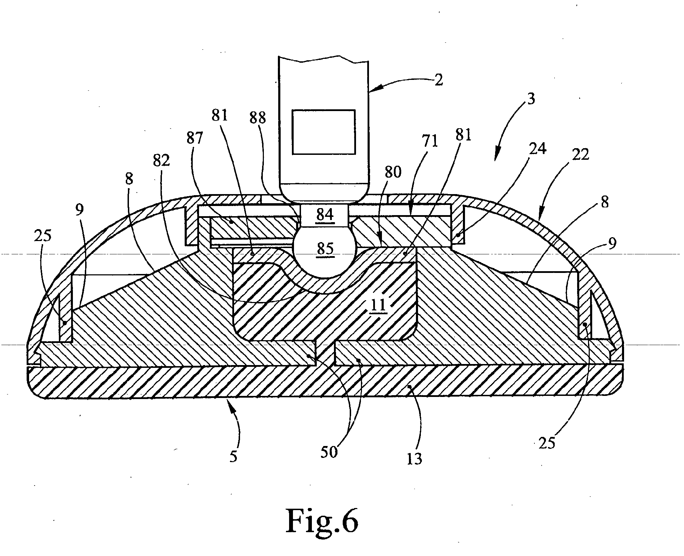

Figures 4, 5 and 6, in which elements the same as or similar to those already shown in Figures 1 to 3 are distinguished by the same reference numbers, show a further example of a second possible practical embodiment of the invention.

The support foot also comprises a stem 2 and a base block 3.

The stem 2 is obtained by means of reduction turning from a round rod or bar which is preferably threaded by means of rolling and is therefore very low-cost. The stem 2 comprises a cylindrical portion 83, which is preferably threaded, for joining to the heavy body which must be supported by the foot. A cylindrical portion 84 having a smaller diameter, and therefore a rounded terminal portion 85 which is preferably spherical and has a diameter slightly smaller than the diameter of the cylindrical portion 83, is obtained, by means of turning, at the end of the cylindrical portion 83 of the stem.

The base block 3 comprises a base-block body 4 and an underlying cushion 13 made of non-slip elastomeric material for absorbing vibrations. The base-block body 4 is substantially identical to that of the preceding embodiment, except for the following differences. A first difference consists in the fact that a single central opening 140 is provided in place of the plurality of openings 14 arranged in a spoke-like manner; as in the preceding case, however, the opening 140 could also not be provided. Another difference consists in the fact that a portion 72 with a C-shaped cross-section directed towards the inside of the chamber 7 and defined by a groove 70 is provided substantially at the top of the annular walls 6, in place of the lugs 61 projecting towards the inside of the chamber 7. The portion 72 is open on one side over an arc of sufficient length to allow the insertion, in the manner of a bayonet-type joint in the horizontal direction, of an insert 71 which is shaped for this purpose so as to have a shoulder 73 which is designed to engage with the groove 70 and which surrounds a portion 74 which has a greater thickness, but smaller width and the peripheral edge 75 of which, when the insert is inserted, mates with the upper inner edge 76 of the portion 72. The insert 71 is also provided with a radial slit 77 which is open on one side and has a width substantially equal to the diameter of the portion 84 of the stem and which extends as far as the centre of the insert 71 where it widens out into a circular opening 78 having a diameter at least equal to the diameter of the spherical terminal portion 85 of the stem 2.

The portion 72 also has formed therein, on the side thereof directed towards the inside of the chamber 7 and on a diametrically opposite side with respect to the opening of the said portion 72, a niche 86 which acts as a sliding seat for receiving a tongue 87 which has, formed in its top end, a substantially circular recess 88 having a diameter substantially equal to the diameter of the stem portion 84.

Another difference with respect to the embodiment described above is that a disc 80 is provided in place of the ring 18, said disc 80 having a diameter substantially corresponding to the internal diameter of the chamber 7 with a substantially flat outer zone 81 and a central part 82 drawn so as to form a substantially hemispherical bottom.

The insert 11 made of elastomeric material is formed so as to have, on its upper surface, an outer zone 86 and a recessed portion 87 having a shape substantially matching that of the bottom 82.

In order to assemble the support foot, the disc 80 is firstly inserted into the chamber 7 so that the outer zone 81 thereof rests on the outer zone 86 of the insert 11 and the bottom 82 is seated in the recessed portion 87.

The tongue 87 is then inserted into the niche 86.

The spherical end 85 of the stem 2 is then brought up to and rested inside the bottom 82 and the insert 71 is inserted, the stem portion 84 of smaller diameter being seated inside the slit 77. The insert 71 is pushed to the end of its travel, a position where the circular opening 78 is located above the spherical end 85 of the stem. The insert 71 prevents the stem 2 from coming out of the base block, retaining it in the manner of a guillotine.

The tongue 87 is then bent back towards the insert 71, the recess 88 partially enclosing the stem portion 84 facing it. In this way, the stem portion 84 is enclosed both by the wall of the circular opening 78 of the insert 71 and by the wall of the recess 88 in the tongue 87.

If necessary, the cap 22 is then mounted on the base block.

During use, the load applied to the stem 2 is transferred to the disc 80 and from here to the insert 11 made of elastomeric material; the latter then distributes the load over the surface of the chamber 7. With the support foot according to this second embodiment, a greater degree of articulation between the stem and the base block is possible.

It should be noted, finally, that, if considerations regarding the load which can be withstood by the support foot require the use of stems with an already relatively large diameter, it will also not even be necessary to provide the ring 18 or the disc 80, i.e. the stem 2 may rest directly on the insert 11 made of elastomeric material.

## Claims

1. Support foot for heavy bodies, in particular operating machines and the like, comprising a stem (2) for joining the foot (1) to the machine, joined to a base block (3) intended to rest on a support surface, characterized in that said base block (3) comprises a chamber (7) containing a load distribution means (11) designed to receive, from the stem (2), a load applied to the said stem and distribute it over the walls of the chamber (7).

2. Support foot according to Claim 1, characterized in that said load distribution means (11) is an insert made of elastomeric material and seated-inside the chamber (7).

3. Support foot according to Claim 2, characterized in that said load distribution means (11) is an insert made of thermoplastic rubber or vulcanized rubber or silicone rubber.

4. Support foot according to Claim 2 or Claim 3, characterized in that said stem rests directly on said insert (11) made of elastomeric material.

5. Support foot according to Claims 1, 2 or 3, characterized by comprising means (18;80) for transferring the load applied to the stem (2) to said load distribution means (11).

6. Support foot according to Claim 5, characterized in that said means (18;80) for transferring the load are means which co-operate with the chamber (7) substantially in a cylinder/piston relationship.

7. Support foot according to Claim 5 or Claim 6, characterized in that said means (18) for transferring the load are associated with the stem (2).

8. Support foot according to Claim 7, characterized in that said means (18) for transferring the load comprises a ring which has a shape and dimensions corresponding to the chamber (7) and is fitted onto the stem (2) on an end portion (16) thereof for joining to the base block (3).

9. Support foot according to Claim 8, characterized in that said stem (2) is made of metal, in particular steel, and in the region of the said end portion (16) has a narrower cross-section so as to form a shoulder (160) with a stem portion having a greater cross-section so that, during use, said ring (18) is arranged in engaging contact against said shoulder (160).

10. Support foot according to Claim 9, characterized in that said ring (18) comprises a drawn portion and said shoulder (160) is conical so as to allow a relative inclination of stem (2) and ring (18).

11. Support foot according to Claim 9 or Claim 10, characterized in that said ring (18) is prevented from coming off said end portion (16) of the stem (2) by means of removable anti-extraction means (19).

12. Support foot according to Claim 6, characterized in that said means (80) for transferring the load applied to the stem (2) comprise a disc-shaped element which rests on said load distribution means (11), said disc-shaped element being shaped so as to form a bottom (82) designed to seat a rounded end (85) of the stem (2).

13. Support foot according to Claim 12, characterized in that said bottom (82) is substantially hemispherical and said rounded end (82) is substantially spherical matching the bottom (82).

14. Support foot according to any one of the preceding claims, characterized in that said chamber (7) is defined by an annular wall (6) which projects from a base (5) of the base block (3).

15. Support foot according to Claim 14, characterized in that, on the side of the annular wall (6) opposite the chamber (7), ribs (8) extend from the annular wall (6) to the base (5) of the base block so as to transmit onto the base (5) the forces exerted on the annular wall (6) by said load distribution means (11).

16. Support foot according to any one of the preceding claims, characterized in that said base block (3) is made of rigid synthetic material, in particular polyamide or polypropylene.

17. Support foot according to any one of the preceding claims, characterized in that said base block comprises, on the side intended to rest on the support surface, a cushion (13) made of elastomeric material.

18. Support foot according to Claim 17 in that dependent on any one of Claims 2 to 16, characterized in that said cushion (13) and said insert (11) are formed as one piece.

19. Support foot according to any one of the preceding claims, characterized by comprising a covering cap (22) which is made in particular of synthetic material such as polypropylene and which can be associated with the base block (3) so as to close it at the top.

20. Support foot according to Claim 19, characterized in that said cap (22) can be associated with the base block (3) by means of geometrical joining means (24,6,25,9,26,10).
